# EUROPEAN PATENT SPECIFICATION

(11) **EP 3 576 536 B1**
(45) Date of publication and mention of the grant of the patent: **29.03.2023**
(21) Application number: 18706833.3
(22) Date of filing: 02.02.2018
(51) Int. Cl.: A01P 19/00, A01M 1/02, A01N 43/12, A01N 43/90

(54) **PEST ATTRACTANT COMPOSITIONS COMPRISING THEASPIRANE**
ZUSAMMENSETZUNGEN ENTHALTEND THEASPIRAN ALS LOCKSTOFF FÜR SCHÄDLINGE
COMPOSITIONS COMPRENANT THEASPIRANE UTILISÉS COMME ATTRACTIF POUR NUISIBLES

(30) Priority: 10.07.2017 GB 201711075; 03.02.2017 GB 201701810
(43) Date of publication of application: 11.12.2019
(73) Proprietor: Rothamsted Research Ltd, Harpenden, Hertfordshire AL5 2JQ (GB); The Council For Scientific And Industrial Research, Accra (GH)
(72) Inventor: BRAIMAH, Haruna, Accra (GH); PICKETT, John, Cardiff CF10 3AT (GB); BIRKETT, Michael, Harpenden Hertfordshire AL5 2JQ (GB)
(74) Representative: Sweetinburgh, Mark Roger
(86) International application number: PCT/GB2018/050300
(87) International publication number: WO 2018/142145

(56) References cited:
- WO-A1-2008/101827
- WO-A2-2006/040766
- CERDA H ET AL: "A synergistic aggregation pheromone component in the banana weevil Cosmopolites sordidus Germar", ACTA CIENT. VENEZ., vol. 49, no. 3, 1998, pages 201-203, XP9504348,
- ALPIZAR D ET AL: "Management ofandin Banana by Pheromone-Based Mass Trapping", JOURNAL OF CHEMICAL ECOLOGY, KLUWER ACADEMIC PUBLISHERS-PLENUM PUBLISHERS, NE, vol. 38, no. 3, 10 March 2012 (2012-03-10) , pages 245-252, XP035033301, ISSN: 1573-1561, DOI: 10.1007/S10886-012-0091-0
- GADI V P REDDY ET AL: "A PHEROMONE BASED TRAPPING SYSTEM FOR MONITORING THE POPULATION OF COSMOPOLITES SORDIDUS (GERMAR)", J.PLANT PROT. RESEARCH, vol. 48, no. 4, 2008, pages 515-527, XP002779506,
- SEETHARAMAN JAYARAMAN ET AL: "SYNTHESIS, ANALYSIS, AND FILED ACTIVITY OF SORDIDIN, A MALE PRODUCED AGGREGATION PHEROMONE OF THE BANANA WEEVIL", J.CHEM.ECOL., vol. 23, no. 4, 1997, pages 1145-1161, XP002779507,

## Description

The present invention relates to pest attractant compositions, in particular to compositions for luring banana weevils into traps.

Bananas and plantains, genus *Musa,* are the fourth most important crop in developing countries, with a worldwide production of about 100 Mt (FAOStat, 2007). The genus *Musa* is of great importance worldwide due to the commercial and nutritional value of cultivated varieties.

The banana weevil, *Cosmopolites sordidus* Germar (Coleoptera, Curculionidae), is the most important insect pest of bananas and plantains, *Musa spp.* throughout the world. It attacks all types of bananas, including dessert and brewing, highland bananas and plantains.

Females deposit eggs at the base of the pseudostem or on exposed corms. Larvae from the eggs tunnel through the corm to feed and develop. The feeding and tunnelling damages the corm and weakens the plant, reducing water and mineral uptake, resulting in reduction of bunch weight (yield) and causing plant toppling during windstorms. In severe weevil infestations, crop losses of up to 100% have been reported.

Feeding activities of insects are mostly selective and insects commonly make choices between different host plant by cueing on odours for detection and acceptance or discrimination. For instance, the emerging larvae of *C. sordidus* preferentially feed on the banana or plantain rhizome, but will also attack the true stem and, occasionally, the pseudostem.

Feeding damage caused by larvae of *C. sordidus* is protected within the plant tissue, and so management strategies target adult weevils. Semiochemicals (naturally-occurring behaviour- or development-modifying chemicals) constitute important tools for monitoring and detection of weevil populations, and a single sex-specific pheromone has been identified for *C. sordidus* as sordidin. However, use of sordidin is not without its problems and alternative attractants would be highly beneficial.

WO2006/040766 describes agents for control of codling moth in fruit orchards. WO2008/101827 describes a device for biological pest control. Cerda et al (1998) Acta Cientifica Venezolana, 49: 201-203, describes a synergistic aggregation pheromone component in the banana weevil *Cosmopolites sordidus* Germer 1824 (Coleoptera: Curculionidae). Alpizar et al (2012) J Chem Ecol, 38:245-252 describes management of *Cosmopolites sordidus* and *Metamasius hemipterus* in banana by pheromone-based mass trapping. Reddy et al (2008) Journal of Plant Protection Research, Vol. 48, No. 4, 515-527 describes a pheromone-based trapping system for monitoring the population of *Cosmopolites sordidus* Germer 1824 (Coleoptera: Curculionidae). Jayaraman et al (1997) Journal of Chemical Ecology, Vol. 23, No. 4, 1145-1161 describes synthesis, analysis and field activity of sordidin, a male-produced aggregation pheromone of the banana weevil *Cosmopolites sordidus.*

It is, therefore, an object of the present invention to seek to alleviate the above identified problems.

### SUMMARY OF THE INVENTION

According to a first aspect of the present invention, there is provided a pest attractant composition comprising a first pest attractant and a second pest attractant, wherein the first pest attractant comprises theaspirane or an isomer or mixture of isomers thereof and wherein the second pest attractant comprises sordinin or an isomer or mixture of isomers thereof.

Preferably, the pest is an insect, more preferably a beetle, further preferably a weevil.

Preferably, reference to "weevil" means insects of the family *Curculionidae,* more preferably the sub-family *Dryophthorinae,* further preferably the tribe *Sphenophorini* or *Rhynchophorini,* most preferably (i) the genus *Cosmopolites,* preferably *Cosmopolites sordidus,* or (ii) the genus *Odoiporus,* preferably *Odoiporus longicollis,* or (iii) the genus *Rhynchophorus,* preferably *Rhynchophorus palmarum.*

Preferably, the pest is a banana weevil (*Cosmopolites sordidus*) or a banana stem weevil (*Odoiporus longicollis*) or a palm weevil (*Rhynchophorus palmarum*).

Most preferably, the pest is a banana weevil (*Cosmopolites sordidus*) or a banana stem weevil (*Odoiporus longicollis*).

As such, it is preferred that the composition is an insect attractant composition, preferably a beetle attractant composition, preferably a weevil attractant composition, preferably a *Curculionidae* attractant composition, more preferably a *Dryophthorinae* attractant composition, further preferably a *Sphenophorini* attractant composition or a *Rhynchophorini* attractant composition, most preferably (i) a *Cosmopolites* attractant composition, preferably a *Cosmopolites sordidus* attractant composition, or (ii) a *Odoiporus* attractant composition, preferably a *Odoiporus longicollis* attractant composition, or (iii) a *Rhynchophorus* attractant composition, preferably a *Rhynchophorus palmarum* attractant composition.

Preferably, the pest is a pest of a plant of the *Musaceae* family. Preferably, the pest is a pest of a plant of the *Musa* genus or the *Ensete* genus. Preferably, the pest is a plantain plant pest and/or a banana plant pest.

The banana genus *Musa,* and the related plant ensete in the genus *Ensete,* are in the family Musaceae and the Order Zingiberales. They are Monocots like the grasses and cereals. The first member of the Order appeared about 158,000,000 years ago, but the main species in the late Cretaceous, i.e. about 80,000,000 years ago. As well as the Musaceae, other families of the Zingiberales include the ginger plants (Zingiberaceae) and the arrowroots (Marantaceae). Many exotic and ornamental plants are also in this Order. Musa is therefore genetically most related to the Musaceae, then to the Zingiberales, then to the Monocots. It is believed that cultivated bananas originated from three contact zones in the islands of Southeast Asia (ISEA) through complex geodomestication pathways (Li et al (2013) Origins and Domestication of Cultivated Banana Inferred from Chloroplast and Nuclear Genes. PLoS ONE 8(11): e80502. doi: 10. 1371/journal.pone.0080502).

Preferably, the pest is a dessert banana plant pest, a brewing banana plant pest, and/or a highland banana plant pest.

Preferably, the pest is a *Musa paradisica* pest, a *Musa accuminata* pest or an *Ensete ventricosum* pest.

Preferably, the pest is a nematode, for example a banana plant nematode.

Preferably, the pest is an aphid, preferably a banana aphid, preferably *Pentalonia nigronervosa.*

Preferably, the composition is a banana plant pest or plantain plant pest attractant composition.

Preferably, the composition comprises at least about 0.001 µg/µl theaspirane or an isomer or mixture of isomers thereof, preferably between about 0.001 µg/µl and about 0.1 µg/µl theaspirane or an isomer or mixture of isomers thereof, preferably between about 0.001 µg/µl and about 0.01 µg/µl theaspirane or an isomer or mixture of isomers thereof, most preferably about 0.01 µg/µl theaspirane or an isomer or mixture of isomers thereof.

Preferably, the composition comprises at least about 0.02 µg theaspirane or an isomer or mixture of isomers thereof, preferably between about 0.02 µg and about 2 µg theaspirane or an isomer or mixture of isomers thereof, preferably between about 0.02 µg and about 0.2 µg theaspirane or an isomer or mixture of isomers thereof, most preferably about 0.2 µg theaspirane or an isomer or mixture of isomers thereof.

Preferably, the composition comprises at least about 0.001 µg/µl (2*R*,5*S*)-theaspirane, preferably between about 0.001 µg/µl and about 0.1 µg/µl (2*R*,5*S*)-theaspirane, preferably between about 0.001 µg/µl and about 0.01 µg/µl (2*R*,5*S*)-theaspirane, most preferably about 0.01 µg/µl (2*R*,5*S*)-theaspirane.

Preferably, the composition comprises at least about 0.02 µg (2*R*,5*S*)-theaspirane, preferably between about 0.02 µg and about 2 µg (2*R*,5*S*)-theaspirane, preferably between about 0.02 µg and about 0.2 µg (2*R*,5*S*)-theaspirane, most preferably about 0.2 µg (2*R*,5*S*)-theaspirane. Preferably, the mixture of isomers consists of (i) (2*R*,5*S*)-theaspirane, and (ii) (2*S*,5*S*)-theaspirane and the composition comprises at least about 0.001 µg/µl of said mixture, preferably between about 0.001 µg/µl and about 0.01 µg/µl of said mixture, most preferably about 0.01 µg/µl of said mixture.

Preferably, the mixture of isomers consists of (i) (2*R*,5*S*)-theaspirane, and (ii) (2*S*,5*S*)-theaspirane and the composition comprises at least about 0.02 µg of said mixture, preferably between about 0.02 µg and about 0.2 µg of said mixture, most preferably about 0.2 µg of said mixture.

Preferably, the mixture of isomers consists of (i) (2*R*,5*R*)-theaspirane, and (ii) (2*S*,5*R*)-theaspirane and the composition comprises about 0.01 µg/µl of said mixture.

Preferably, the mixture of isomers consists of (i) (2*R*,5*R*)-theaspirane, and (ii) (2*S*,5*R*)-theaspirane and the composition comprises about 0.2 µg of said mixture.

Preferably, the mixture of isomers consists of (i) (2*R*,5*S*)-theaspirane, and (ii) (2*S*,5*R*)-theaspirane and the composition comprises at least about 0.001 µg/µl of said mixture, preferably between about 0.001 µg/µl and about 0.01 µg/µl of said mixture, most preferably about 0.001 µg/µl or about 0.01 µg/µl of said mixture.

Preferably, the mixture of isomers consists of (i) (2*R*,5*S*)-theaspirane, and (ii) (2*S*,5*R*)-theaspirane and the composition comprises at least about 0.02 µg of said mixture, preferably between about 0.02 µg and about 0.2 µg of said mixture, most preferably about 0.02 µg or about 0.2 µg of said mixture.

Preferably, the mixture of isomers consists of (i) (2*R*,5*R*)-theaspirane, and (ii) (2*S*,5*S*)-theaspirane and the composition comprises about 0.01 µg/µl of said mixture.

Preferably, the mixture of isomers consists of (i) (2*R*,5*R*)-theaspirane, and (ii) (2*S*,5*S*)-theaspirane and the composition comprises about 0.2 µg of said mixture.

Preferably, the composition comprises a solvent. Preferably, the solvent is hexane.

Preferably, the composition comprises an extract of banana plant material or a fraction thereof.

Preferably, the composition is a synergist composition for providing a synergistic effect when the first pest attractant is used in combination with the second pest attractant.

Preferably, the first pest attractant comprises one or more isomers of theaspirane selected from (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Preferably, the first pest attractant comprises (2*R*,5*S*)-theaspirane.

Preferably, the first pest attractant comprises (i) (2*R*,5*S*)-theaspirane, and (ii) (2*S*,5*S*)-theaspirane.

Preferably, the first pest attractant comprises (i) (2*R*,5*R*)-theaspirane, and (ii) (2*S*,5*R*)-theaspirane.

Preferably, the first pest attractant comprises (i) (2*R*,5*S*)-theaspirane, and (ii) (2*S*,5*R*)-theaspirane.

Preferably, the first pest attractant comprises (i) (2*R*,5*S*)-theaspirane, and (ii) (2*R*,5*R*)-theaspirane.

Preferably, the first pest attractant comprises (2*S*,5*S*)-theaspirane.

Preferably, the first pest attractant comprises (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Preferably, the first pest attractant consists essentially of theaspirane or an isomer or mixture of isomers thereof.

Preferably, the first pest attractant consists essentially of one or more isomers of theaspirane selected from (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Preferably, the first pest attractant consists essentially of (2*R*,5*S*)-theaspirane.

Preferably, the first pest attractant consists essentially of (i) (2*R*,5*S*)-theaspirane, and (ii) (2*S*,5*S*)-theaspirane.

Preferably, the first pest attractant consists essentially of (i) (2*R*,5*R*)-theaspirane, and (ii) (2*S*,5*R*)-theaspirane.

Preferably, the first pest attractant consists essentially of (i) (2*R*,5*S*)-theaspirane, and (ii) (2*S*,5*R*)-theaspirane.

Preferably, the first pest attractant consists essentially of (i) (2*R*,5*S*)-theaspirane, and (ii) (2*R*,5*R*)-theaspirane.

Preferably, the first pest attractant consists essentially of (2*S*,5*S*)-theaspirane.

Preferably, the first pest attractant consists essentially of (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Preferably, the first pest attractant consists of theaspirane or an isomer or mixture of isomers thereof.

Preferably, the first pest attractant consists of one or more isomers of theaspirane selected from (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Preferably, the first pest attractant consists of (2*R*,5*S*)-theaspirane.

Preferably, the first pest attractant consists of (i) (2*R*,5*S*)-theaspirane, and (ii) (2*S*,5*S*)-theaspirane.

Preferably, the first pest attractant consists of (i) (2*R*,5*R*)-theaspirane, and (ii) (2*S*,5*R*)-theaspirane.

Preferably, the first pest attractant consists of (i) (2*R*,5*S*)-theaspirane, and (ii) (2*S*,5*R*)-theaspirane.

Preferably, the first pest attractant consists of (i) (2*R*,5*S*)-theaspirane, and (ii) (2*R*,5*R*)-theaspirane.

Preferably, the first pest attractant consists of (2*S*,5*S*)-theaspirane.

Preferably, the first pest attractant consists of (i) (2*R*,5*S*)-theaspirane, (ii) (2*R*,5*R*)-theaspirane, (iii) (2*S*,5*R*)-theaspirane, and (iv) (2*S*,5*S*)-theaspirane.

The second pest attractant comprises sordidin (Cosmolure) or an isomer or mixture of isomers thereof.

As discussed in detail below, it has surprisingly been found that theaspirane provides a synergistic effect when used in combination with the known banana weevil pheromone Cosmolure.

Preferably, the second pest attractant consists essentially of sordidin (Cosmolure) or an isomer, or mixture of isomers thereof.

Preferably, the second pest attractant consists of sordidin (Cosmolure) or an isomer or mixture of isomers thereof.

Preferably, the first pest attractant comprises at least about 0.001 µg/µl theaspirane or an isomer or mixture of isomers thereof, preferably between about 0.001 µg/µl and about 0.1 µg/µl theaspirane or an isomer or mixture of isomers thereof.

Preferably, the first pest attractant comprises at least about 0.0025 µg/µl theaspirane or an isomer or mixture of isomers thereof, preferably between about 0.0025 µg/µl and about 0.1 µg/µl theaspirane or an isomer or mixture of isomers thereof, preferably between about 0.0025 µg/µl and about 0.005 µg/µl theaspirane or an isomer or mixture of isomers thereof.

Preferably, the first pest attractant comprises at least about 0.02 µg theaspirane or an isomer or mixture of isomers thereof, preferably between about 0.02 µg and about 2 µg theaspirane or an isomer or mixture of isomers thereof.

Preferably, the first pest attractant comprises at least about 0.05 µg theaspirane or an isomer or mixture of isomers thereof, preferably between about 0.05 µg and about 2 µg theaspirane or an isomer or mixture of isomers thereof, preferably between about 0.05 µg and about 0.1 µg theaspirane or an isomer or mixture of isomers thereof.

Preferably, the first pest attractant consists essentially of at least about 0.001 µg/µl theaspirane or an isomer or mixture of isomers thereof, preferably between about 0.001 µg/µl and about 0.1 µg/µl theaspirane or an isomer or mixture of isomers thereof.

Preferably, the first pest attractant consists essentially of at least about 0.0025 µg/µl theaspirane or an isomer or mixture of isomers thereof, preferably between about 0.0025 µg/µl and about 0.1 µg/µl theaspirane or an isomer or mixture of isomers thereof, preferably between about 0.0025 µg/µl and about 0.005 µg/µl theaspirane or an isomer or mixture of isomers thereof.

Preferably, the first pest attractant consists essentially of at least about 0.02 µg theaspirane or an isomer or mixture of isomers thereof, preferably between about 0.02 µg and about 2 µg theaspirane or an isomer or mixture of isomers thereof.

Preferably, the first pest attractant consists essentially of at least about 0.05 µg theaspirane or an isomer or mixture of isomers thereof, preferably between about 0.05 µg and about 2 µg theaspirane or an isomer or mixture of isomers thereof, preferably between about 0.05 µg and about 0.1 µg theaspirane or an isomer or mixture of isomers thereof.

Preferably, the first pest attractant consists of at least about 0.02 µg theaspirane or an isomer or mixture of isomers thereof, preferably between about 0.02 µg and about 2 µg theaspirane or an isomer or mixture of isomers thereof.

Preferably, the first pest attractant consists of at least about 0.05 µg theaspirane or an isomer or mixture of isomers thereof, preferably between about 0.05 µg and about 2 µg theaspirane or an isomer or mixture of isomers thereof, preferably between about 0.05 µg and about 0.1 µg theaspirane or an isomer or mixture of isomers thereof.

Preferably, the first pest attractant comprises, or consists essentially of about 0.0025 µg/µl or about 0.005 µg/µl theaspirane or an isomer or mixture of isomers thereof.

Preferably, the first pest attractant comprises, consists essentially of, or consists of about 0.05 µg or about 0.1 µg theaspirane or an isomer or mixture of isomers thereof.

Preferably, the mixture of isomers consists of (i) (2*R*,5*S*)-theaspirane, and (ii) (2*S*,5*S*)-theaspirane.

Preferably, the mixture of isomers consists of (i) (2*R*,5*R*)-theaspirane, and (ii) (2*S*,5*R*)-theaspirane.

Preferably, the mixture of isomers consists of (i) (2*R*,5*S*)-theaspirane, and (ii) (2*S*,5*R*)-theaspirane.

Preferably, the mixture of isomers consists of (i) (2*R*,5*S*)-theaspirane, and (ii) (2*R*,5*R*)-theaspirane.

Preferably, the first pest attractant comprises at least about 0.001 µg/µl (2*R*,5*S*)-theaspirane, preferably between about 0.001 µg/µl and about 0.1 µg/µl (2*R*,5*S*)-theaspirane.

Preferably, the first pest attractant comprises at least about 0.0025 µg/µl (2*R*,5*S*)-theaspirane, preferably between about 0.0025 µg/µl and about 0.1 µg/µl (2*R*,5*S*)-theaspirane, preferably between about 0.0025 µg/µl and about 0.005 µg/µl (2*R*,5*S*)-theaspirane.

Preferably, the first pest attractant comprises at least about 0.02 µg (2*R*,5*S*)-theaspirane, preferably between about 0.02 µg and about 2 µg (2*R*,5*S*)-theaspirane.

Preferably, the first pest attractant comprises at least about 0.05 µg (2*R*,5*S*)-theaspirane, preferably between about 0.05 µg and about 2 µg (2*R*,5*S*)-theaspirane, preferably between about 0.05 µg and about 0.1 µg (2*R*,5*S*)-theaspirane or an isomer or mixture of isomers thereof.

Preferably, the first pest attractant consists essentially of at least about 0.001 µg/µl (2*R*,5*S*)-theaspirane, preferably between about 0.001 µg/µl and about 0.1 µg/µl (2*R*,5*S*)-theaspirane.

Preferably, the first pest attractant consists essentially of at least about 0.0025 µg/µl (2*R*,5*S*)-theaspirane, preferably between about 0.0025 µg/µl and about 0.1 µg/µl (2*R*,5*S*)-theaspirane, preferably between about 0.0025 µg/µl and about 0.005 µg/µl (2*R*,5*S*)-theaspirane.

Preferably, the first pest attractant consists essentially of at least about 0.02 µg (2*R*,5*S*)-theaspirane, preferably between about 0.02 µg and about 2 µg (2*R*,5*S*)-theaspirane.

Preferably, the first pest attractant consists essentially of at least about 0.05 µg (2*R*,5*S*)-theaspirane, preferably between about 0.05 µg and about 2 µg (2*R*,5*S*)-theaspirane, preferably between about 0.05 µg and about 0.1 µg (2*R*,5*S*)-theaspirane or an isomer or mixture of isomers thereof.

Preferably, the first pest attractant consists of at least about 0.02 µg (2*R*,5*S*)-theaspirane, preferably between about 0.02 µg and about 2 µg (2*R*,5*S*)-theaspirane.

Preferably, the first pest attractant consists of at least about 0.05 µg (2*R*,5*S*)-theaspirane, preferably between about 0.05 µg and about 2 µg (2*R*,5*S*)-theaspirane, preferably between about 0.05 µg and about 0.1 µg (2*R*,5*S*)-theaspirane or an isomer or mixture of isomers thereof.

Preferably, the first pest attractant comprises, or consists essentially of about 0.0025 µg/µl or about 0.005 µg/µl (2*R*,5*S*)-theaspirane.

Preferably, the first pest attractant comprises, consists essentially of, or consists of about 0.05 µg or about 0.1 µg (2*R*,5*S*)-theaspirane.

Preferably, the mixture of isomers consists of (i) (2*R*,5*S*)-theaspirane, and (ii) (2*S*,5*S*)-theaspirane and the first pest attractant comprises, or consists essentially of at least about 0.001 µg/µl of said mixture, preferably between about 0.001 µg/µl and about 0.01 µg/µl of said mixture.

Preferably, the mixture of isomers consists of (i) (2*R*,5*S*)-theaspirane, and (ii) (2*S*,5*S*)-theaspirane and the first pest attractant comprises, or consists essentially of at least about 0.0025 µg/µl of said mixture, preferably between about 0.0025 µg/µl and about 0.01 µg/µl of said mixture, preferably between about 0.0025 µg/µl and about 0.005 µg/µl of said mixture, preferably about 0.0025 µg/µl or about 0.005 µg/µl of said mixture.

Preferably, the mixture of isomers consists of (i) (2*R*,5*S*)-theaspirane, and (ii) (2*S*,5*S*)-theaspirane and the first pest attractant comprises, consists essentially of, or consists of at least about 0.02 µg of said mixture, preferably between about 0.02 µg and about 0.2 µg of said mixture.

Preferably, the mixture of isomers consists of (i) (2*R*,5*S*)-theaspirane, and (ii) (2*S*,5*S*)-theaspirane and the first pest attractant comprises, consists essentially of, or consists of at least about 0.05 µg of said mixture, preferably between about 0.05 µg and about 0.2 µg of said mixture, preferably between about 0.05 µg and about 0.1 µg of said mixture, preferably about 0.05 µg or about 0.1 µg of said mixture.

Preferably, the mixture of isomers consists of (i) (2*R*,5*S*)-theaspirane, and (ii) (2*S*,5*R*)-theaspirane and the first pest attractant comprises or consists essentially of at least about 0.001 µg/µl of said mixture, preferably between about 0.001 µg/µl and about 0.01 µg/µl of said mixture.

Preferably, the mixture of isomers consists of (i) (2*R*,5*S*)-theaspirane, and (ii) (2*S*,5*R*)-theaspirane and the first pest attractant comprises or consists essentially of at least about 0.0025 µg/µl of said mixture, preferably between about 0.0025 µg/µl and about 0.01 µg/µl of said mixture, preferably between about 0.0025 µg/µl and about 0.005 µg/µl of said mixture, preferably about 0.0025 µg/µl or about 0.005 µg/µl of said mixture.

Preferably, the mixture of isomers consists of (i) (2*R*,5*S*)-theaspirane, and (ii) (2*S*,5*R*)-theaspirane and the first pest attractant comprises, consists essentially of, or consists of at least about 0.02 µg of said mixture, preferably between about 0.02 µg and about 0.2 µg of said mixture.

Preferably, the mixture of isomers consists of (i) (2*R*,5*S*)-theaspirane, and (ii) (2*S*,5*R*)-theaspirane and the first pest attractant comprises, consists essentially of, or consists of at least about 0.05 µg of said mixture, preferably between about 0.05 µg and about 0.2 µg of said mixture, preferably between about 0.05 µg and about 0.1 µg of said mixture, preferably about 0.05 µg or about 0.1 µg of said mixture.

Preferably, the composition comprises at least about 80mg sordidin or an isomer or mixture of isomers thereof.

Preferably, the composition comprises between about 80mg and about 100mg sordidin or an isomer or mixture of isomers thereof.

Preferably, the composition comprises at least about 90 mg sordidin or an isomer or mixture of isomers thereof.

Preferably, the composition comprises about 90 mg sordidin or an isomer or mixture of isomers thereof.

Preferably, the composition comprises a Cosmolure lure.

Preferably, the sordidin is a commercially available Cosmolure lure which has been left open for at least about 14 days, preferably at least about 18 days, preferably at least about 21 days.

Preferably, the Cosmolure lure is a P160-Lure, from ChemTica International, South Africa.

Preferably, the composition comprises a mixture of sordidin isomers, preferably a racemic mixture of sordidin isomers.

According to another aspect of the present invention, there is provided use of a composition of the present invention for attracting pests.

Preferably, the composition comprises a first pest attractant and a second pest attractant, wherein the first pest attractant comprises theaspirane or an isomer or mixture of isomers thereof, the second attractant comprises sordidin, and wherein the sordidin is a commercially available Cosmolure lure which has been left open for between about 14 days and about 28 days, most preferably between about 14 days and about 21 days.

According to another aspect of the present invention, there is provided a trap for catching pests, wherein the trap comprises a composition of the present invention.

Preferably, the trap is selected from a pitfall trap, a ramp trap and a pseudostem trap.

Preferably, the trap is a pitfall trap.

Within this specification, reference to theaspirane means a compound of Formula I or an isomer or mixture of isomers thereof.

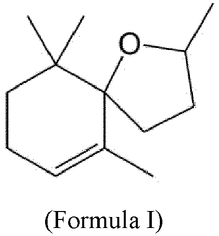

Preferably, reference to a mixture of isomers means two or more, three or more, or four isomers selected from (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Preferably, reference to "theaspirane" means a mixture of all four theaspirane isomers, also referred to as (2RS,5RS)-theaspirane.

Preferably, reference to "theaspirane" means a racemic mixture of all four theaspirane isomers.

Preferably, reference to a mixture of isomers means a racemic mixture of isomers, for example of two or more, three or more, or four isomers selected from (i) (2*R*,5*S*)-theaspirane, (ii) (2*R*,5*R*)-theaspirane, (iii) (2*S*,5*R*)-theaspirane, and (iv) (2*S*,5*S*)-theaspirane.

Within this specification, reference to (2*R*,5*S*)-theaspirane means a compound of Formula II.

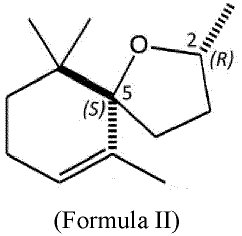

Within this specification, reference to (2*R*,5*R*)-theaspirane means a compound of Formula III.

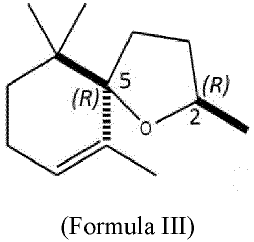

Within this specification, reference to (2*S*,5*R*)-theaspirane means a compound of Formula IV.

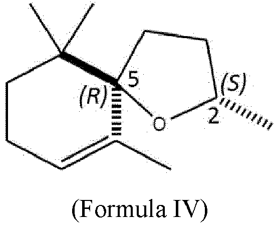

Within this specification, reference to (2*S*,5*S*)-theaspirane means a compound of Formula V.

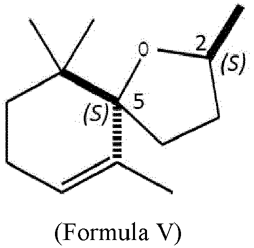

Within this specification, reference to sordidin means a compound of Formula VI or an isomer or mixture of isomers thereof.

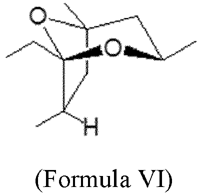

Sordidin is a known banana weevil attractant/pheromone sold under the name Cosmolure.

Within this specification "consists essentially" means that the composition does not include further components that materially affect the essential characteristics of the composition. For example, a composition which consists essentially of theaspirane or (2*R*,5*S*)-theaspirane could also contain a suitable solvent, such as hexane. As such, a composition which consists essentially of theaspirane or (2*R*,5*S*)-theaspirane could be provided with a desired concentration of theaspirane or (2*R*,5*S*)-theaspirane in a solvent.

Within this specification, the term "about" means plus or minus 20%, more preferably plus or minus 10%, even more preferably plus or minus 5%, most preferably plus or minus 2%.

Within this specification, the term "one or more" includes reference to "all".

It will be appreciated that all preferred features described herein are applicable to all aspects of the invention described herein and vice versa.

### DETAILED DESCRIPTION

Example embodiments of the present invention will now be described with reference to the accompanying Figures, in which:-
Figure 1 shows the 70eV EI mass spectrum of EAG-active compound identified from natural volatile material collected from senesced banana leaves (upper), identified as a theaspirane isomer **1** and NIST-MS of theaspirane (lower). Inset: retro-Diels-Alder re-arrangement of **1.**
Figure 2 shows enantioselective (chiral) GC-EAG analysis of the four synthesized theaspirane isomers (upper) and natural volatile material collected from senesced banana leaves (lower), showing alignment of the (2*R*,5*S*)-isomer with the natural theaspirane isomer.
Figure 3 shows chemoenzymatic synthesis of theaspirane isomers.

The present invention relates to compositions for use in attracting pests, such as banana weevils, into traps. The pests can then be disposed of without the need for widespread use of chemical pesticides.

The compositions of the present invention include a newly identified extract of banana plant leaves, theaspirane, and, in particular, a specific isomer thereof. Theaspirane is commercially available in synthetic form.

### Example 1 - Identification of (2R,5S)-theaspirane from attractive senesced banana leaves

As discussed below, the principal electrophysiologically active volatile component produced by the highly attractive senesced host banana leaves, *Musa* spp., for the banana weevil, *Cosmopolites sordidus,* was shown by coupled GC-mass spectrometry, chemical synthesis and coupled enantioselective (chiral) GC-electrophysiology (GC-EAG) to be (2*R*,5*S*)-theaspirane.

Previous studies have shown that adult host location is influenced by a highly attractive kairomone from senesced banana leaves, which if identified could provide an effective and affordable method of *C*. *sordidus* control on smallholder farms. As shown herein, by analysing coupled gas chromatography-electrophysiology (GC-EAG) recordings from the antennae of adult female *C*. *sordidus* using natural volatile material collected from senesced banana leaf material, it was found that the attractiveness of the material is caused by a very minor component with highly significant EAG activity.

All chemicals were purchased from Sigma-Aldrich unless otherwise stated. All were of analytical quality or better and used as received unless otherwise stated. ¹H NMR spectra were measured on a Bruker Avance 500 MHz spectrometer and were recorded as chemical shifts in parts per million downfield from tetramethylsilane (CDCl₃ as NMR solvent), multiplicity (s = singlet, d = doublet, q = quartet, m = multiplet), coupling constant (to the nearest 0.5Hz) and assignment, respectively. Coupled GC-MS analysis was performed using a Waters Autospec Ultima mass spectrometer (+EI, 70eV, source temperature 250°C, m/z 40-500) coupled to an Agilent 6890 GC fitted with a DB-1 capillary column (J & W scientific, 50m x 0.32 mm id x 0.52um film thickness) and a cool on-column injector. The oven temperature was programmed to start at 30°C for 5 min, then rise at 5°C/min until 250°C, with a final hold of 10 minutes. The carrier gas was helium. Tentative identification of the EAG-active compound for *C*. *sordidus* was confirmed by comparison of GC retention time and peak enhancement.

Electroantennogram (EAG) recordings were made using Ag-AgCl glass electrodes filled with saline solution (Sodium chloride 7.55 g/l, Potassium chloride 0.64 g/l, Calcium chloride (dihydrate) 0.22 g/l, Magnesium chloride 1.73 g/l, Sodium bicarbonate 0.86 g/l, Sodium orthophosphate 0.61 g/l). The head of an adult female banana weevil, *Cosmopolites sordidus,* was excised and placed within the indifferent electrode and the tips of the antennae were removed before they were inserted into the recording electrode. The signals were passed through a high impedance amplifier (UN-06, Syntech, Hilversum, The Netherlands) and analysed using a customised software package (Syntech). The coupled GC-electrophysiology system, in which the effluent from the GC column is simultaneously directed to the antennal preparation and the GC detector, has been described previously (L.J. Wadhams, L.J. Chromatography and Isolation of Insect Hormones and Pheromones. Plenum Press, New York and London, 1990. pp. 289-298). Separation of the synthetic isomers of theaspirane and the natural volatile material collected from senesced banana leaf material was achieved on an Agilent 6890 GC equipped with a cool on-column inlet and an FID, using a BetaDEX ^{™} 120 column (Supelco, 30m x 0.25mm i.d. x 0.25 µm film thickness). The carrier gas was helium. The oven temperature was maintained at 30°C for 2 minutes and then programmed at 12°/minute to 220°C. The outputs from the EAG amplifier and the FID were monitored simultaneously and analysed using the Syntech software package. A peak was deemed to be electrophysiologically active if it elicited responses on three or more antennal preparations.

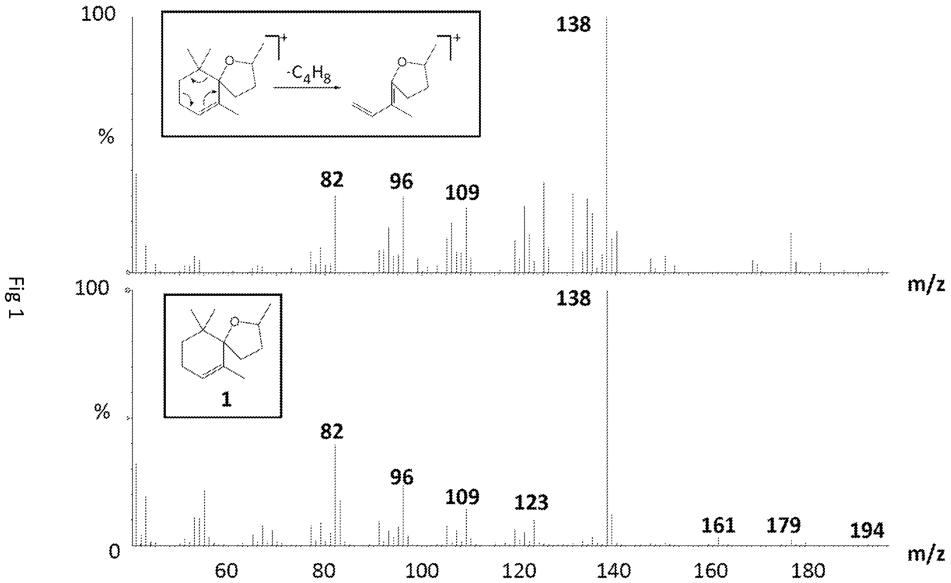

The 70eV EI mass spectrum of the unknown EAG-active component (Figure 1) showed a base peak at *m*/*z* 138, an additional diagnostic fragment at *m*/*z* 179 and a molecular ion at *m*/*z* 194. Comparison of the spectrum of the unknown with the literature suggested the identity of the unknown component as a theaspirane isomer **1,** with the base peak being rationalised as the loss of an isobutene (C₄H₈) unit *via* a thermally induced retro Diels-Alder rearrangement (Figure 1 inset). The presence of two stereocentres (at the 2- and 5- position) gives rise to four possible stereoisomers.

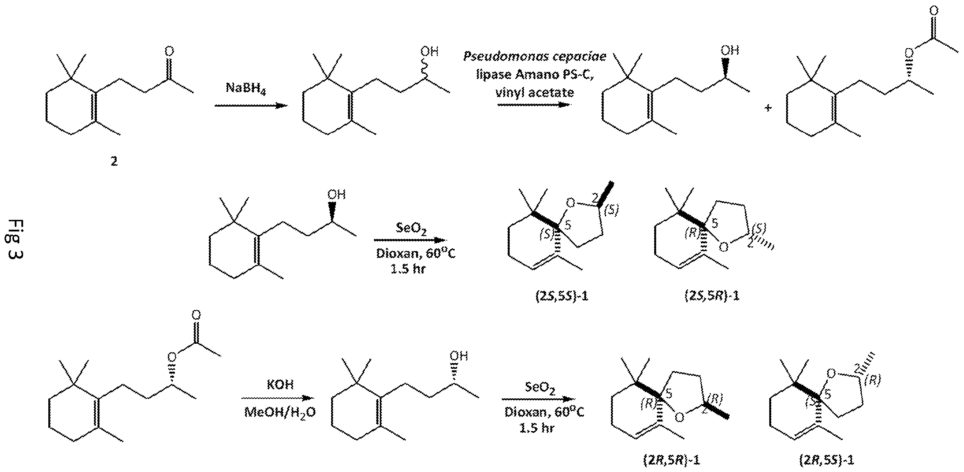

As shown in Figure 3, chemoenzymatic synthesis of all four isomers from commercially available dihydro-β-ionone **2** was undertaken. Reduction of **2** with sodium borohydride in a non-stereospecific manner gave a mixture of the (*R*) and (*S*)-isomers of dihydro-β-ionol in overall 100% yield. The mixture of ionol isomers was resolved chemoenzymatically using lipase-mediated acetylation (*Pseudomonas cepaciae* lipase Amano PS-C, vinyl acetate, 99.2% ee *R*, 94.8% ee *S*). By adjusting incubation time, it was possible to obtain 99.1% ee S.

Following separation of the (*R*)-ionol acetate and the (*S*)-ionol by silica gel liquid chromatography, the ionol then underwent intramolecular 5-*exo*-trig cyclisation upon heat treatment with selenium dioxide in dioxan to generate a diastereomeric pair of theaspirane isomers ((2*S*,5*S*)-**1**, (2*S*,5*R*)-**1**)†, overall 35% yield over 2 steps).

Cleavage of the (*R*)-acetate (using potassium hydroxide in aqueous methanol) followed by similar treatment of the (*R*)-ionol with selenium dioxide in dioxan furnished the other diastereomeric pair of theaspirane isomers ((2*R*,5*R*)-**1**, (2*R*,5*S*)-**1**)† in overall 41% yield over 2 steps.

The diastereoisomers were difficult to separate on silica gel (4% diethyl ether in petroleum ether) due to their lack of polarity and so the isolated diastereomeric excesses were variable and mixed fractions reduced recovery. However, a purified enantiomer of the synthetic natural product, (2*R*,5*S*)-**1**, was obtained in 98.7% ee, 99.5% de. To verify the relative stereochemistry, nuclear Overhauser experiments on the (2*R*,5*S*)-**1** showed a nOe correlation between the 6-Me groups and the H-2 proton showing this proton must be on the face of the tetrahydrofuran moiety facing to the C-6 gem-dimethyl group. Complementary verification was observed by analysing (5*R*,2*R*)-**1** in which a nOe correlation was observed between the 2-Me group and the C-6 gem-dimethyl group.

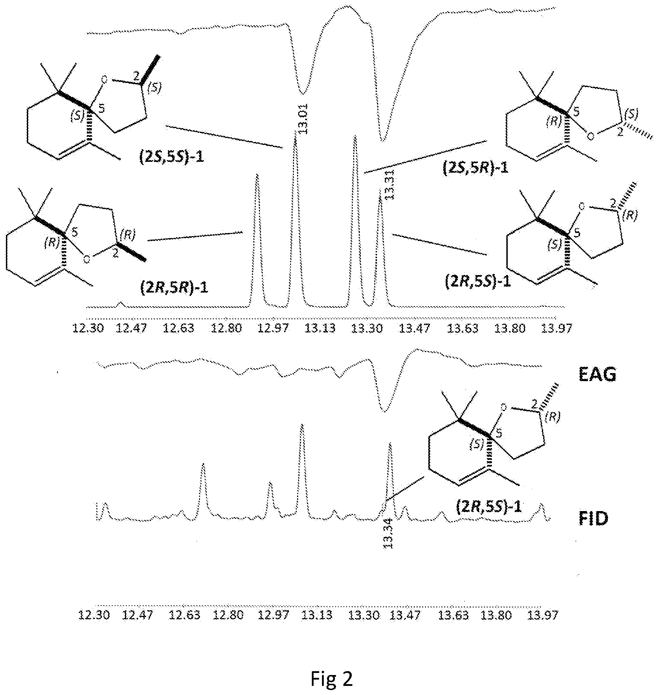

Coupled enantioselective (chiral) GC-EAG analysis using a mix of all four synthetic isomers revealed the relative GC retention times of the isomers (Figure 2, lower trace), and comparison with coupled enantioselective GC-EAG analysis using the natural volatile material collected from senesced banana leaf material revealed matching GC retention times for the (2*R*,5*S*)-isomer and the natural theaspirane isomer (Figure 2 upper trace), thus confirming the identity of the electrophysiologically active naturally-occurring isomer to be (2*R*,5*S*)-**1**.

In behaviour assays with female *C*. *sordidus* conducted in a linear three chamber olfactometer (**ESI**), senesced banana leaf material and collected volatile organic compounds (VOCs) were significantly attractive (P = 0.013 and 0.001 respectively) compared to controls but were equally attractive in dual-choice assays. A mixture of the natural (2*R*,5*S*)-**1** and non-natural (2S,5*R*)-**1** isomers was behaviourally active at a dose of 0.2 µg and 0.02 µg (Students' *t*-test; *P* < 0.003, *P*<0.01 respectively). A mixture of the non-natural (2*S*,5*S*)-**1** and (2*R*,5*R*)-**1** isomers was shown to have behavioural activity only at a dose of 0.2 µg (*P* = 0.04), in spite of observed EAG activity for (2*S*,5*S*)-**1**. When tested in combination with commercially available sordonin (Cosmolure), a mixture of (2*R*,5*S*)-**1** and (2*S*,5*R*)-**1** at a dose of 0.05 µg synergised the activity of the pheromone (*P* = 0.04). The EAG data suggests that antennal detection of the theaspiranes requires a particular structural motif, ie. 5S stereochemistry, but that a specific overall 3D structure of the compound, ie (2*R*,5*S*), is required to elicit the behavioural response in adult female *C. sordidus.*

### † Selected NMR data for 1:

(2*RS*,5*RS*)-theaspirane **1** δ 5.28 (1H, br s, H-9), 4.14 (1H, ddq, *J* = 5.8, 11.4, 5.8 Hz, H-2), 2.10-1.78 (5H, m), 1.73 (3H, br s, 10-Me), 1.56 (1H, ddd, *J* = 6.4, 10.6, 13.4 Hz), 1.47-1.37 (2H, m), 1.29 (3H, d, *J* = 5.9 Hz, 2-Me), 0.97 (3H, s, 6-Me), 0.90 (3H, s, 6-Me).

(2*RS*,5*SR*)-theaspirane **1** δ 5.42 (1H, br s, H-9), 4.04 (1H, ddq, *J* = 5.8, 11.5, 5.8 Hz, H-2), 2.12-1.96 (4H, m), 1.82-1.77 (1H, m), 1.72 (3H, br s, 10-Me), 1.69 (1H, dt, *J* = 15.1, 7.6 Hz), 1.62-1.53 (1H, m), 1.31 (1H, dt, *J* = 5.3, 13.0 Hz), 1.28 (3H, d, *J* = 6.0 Hz, 2-Me), 0.99 (3H, s, 6-Me), 0.87 (3H, s, 6-Me).

### Example 2 - Behavioural responses to natural and synthetic sources of (2RS,5RS)-theaspirane.

A linear, three-chambered olfactometer, comprising of three identical round Perspex arenas was used to carry out behavioural bioassays. The olfactometer was made up of a test chamber in the middle, and two response chambers attached opposite to each other on the sides of the test chamber. Each chamber was provided with a fitting cover, also made of Perspex. The top cover of the test chamber had a vent through which air could be drawn out of the equipment, resulting in a stream of air flowing from the charcoal filters. Each of the three arenas/chambers was about 900 mm of internal diameter, 500 mm height and linked to each other by a 6.5 mm length narrow tube channels also made of Perspex. The channels allowed movement of weevils from one chamber to the other. Black tape was used to bind and cover the entire set up to make it dark and opaque so as to mimic nocturnal environment. The left and right edges of the olfactometer had openings that allowed movement of air into the set up. These vents were connected with charcoal filters through which the air was filtered before it entered into the chambers. The olfactometer tests were carried out in a black wooden 95 cm x 70 cm x 68 cm (lxbxh) rectangular box that was used to create artificial darkness over the olfactometer to mimic the nocturnal environment similar to that in which the weevils operate.

Test weevils used in the bioassay were drawn from within a laboratory-maintained population. Drawn weevils were cultured in a separate container without food (pseudostem). The weevils were starved for 12 hours (H. Braimah and H.F. van Emden, Bull. Ent. Res., 1999, 89, 485) before they were used in bioassay tests. Bioassays were conducted using groups of ten weevils drawn from the test weevils. The drawn test weevils were placed in the main chamber, and allowed 20-30 minutes to respond to and move into stimuli in either response chamber. After this first test period if two (20%) or more weevils failed to decide and respond to either test material, a further 10-15 min was allowed for them to respond. At the end of the permitted time, the number of weevils in each response chamber was recorded.

For each test material, a total of 200 different weevils were used in twenty replicate tests and chambers were switched between replicates. Data were analysed using proportionate analyses based on the assumption that ordinarily randomly moving weevils ought to respond to test materials equally if the materials are equally attractive. 7-Tests were used to determine differences between the proportions. Assays comprised of testing (i) senesced banana leaf material versus clean air control (ii) senesced banana leaf volatile organic compounds (VOCs) collected by air entrainment versus a diethyl ether control (iii) synthetic theaspirane solutions in hexane versus a hexane control (iv) theaspirane isomers versus theaspirane isomers (v) senesced banana leaf material versus theaspirane (vi) aggregation pheromone (commercial lure) versus clean air control (vii) aggregation pheromone plus theaspirane versus control (viii) aggregation pheromone plus theaspirane versus aggregation pheromone. For each assay involving extracts, 20µl of the test solution or control solvent was applied to pieces of filter paper, allowed to dry off for about 5-10 seconds and placed in a predetermined test chamber of the olfactometer. Further details of treatments used are described in Table 1. (2*RS*,5*RS*)-Theaspirane (2,6,10,10-tetramethyl-1-oxaspiro[4.5]dec-6-ene) was purchased from Sigma Aldrich, UK and separated into the two pairs of isomers ((2*R*,5*R*) plus (2*S*,5*R*); (2*S*,5*S*) plus (2*R*,5*S*)) using preparative scale gas chromatography.

Volatile organic compounds (VOCs) were collected from senesced banana leaf material by dynamic headspace collection using standard techniques. Air filtered through activated charcoal was pumped through a glass jar containing 80-100 g of senesced banana leaves material at 900 ml min⁻¹ and the VOCs were trapped on Porapak Q (50 mg, 50-80 mesh) packed in a glass tube. The VOCs were collected repeatedly, and each collection was eluted with 750 µl distilled diethyl ether after 72 hours of continuous trapping, and stored at -20°C in tightly capped microvials until required for behavioural and electrophysiological studies as well as chemical analysis (in Example 1).

Solutions of the theaspirane isomer pairs were prepared as described above at concentrations of 0.1 µg/µl, 0.01 µg/µl and 0.001 µg/µl. An additional solution at a concentration of 0.0025 µg/µl was also prepared for use in behavioural bioassay. All the theaspirane solutions were prepared using redistilled hexane as solvent, and stored at 4°C until they were used in behavioural bioassays.

**Table 1. Olfactory responses of adult banana weevils, Cosmopolites sordidus, to senesced banana leaf material, banana leaf VOCs and theaspirane in a linear olfactometer. Response measured as the mean (± SE) number of weevils found in each chamber of the olfactometer at the end of the experiment. Data were analysed by students t-test. NS = No significant difference between treatments. 20 Replicates were done for each assay.**

| **Treatment A** | **Treatment B** | **Mean ± SE** | **Mean ± SE** | ***P*** |
|---|---|---|---|---|
| Senesced banana leaf | Clean air | 5.55 ± 0.44 | 3.25 ± 0.42 | 0.013 |
| Senesced banana leaf VOCs | Diethyl ether | 6.30 ± 1.84 | 3.20 ± 1.88 | 0.001 |
| Senesced banana leaf VOCs | Senesced banana leaf | 4.90 ± 2.27 | 4.45 ± 2.28 | NS |
| Theaspirane^{a} | Hexane | 6.10 ± 1.50 | 3.60 ± 1.50 | 0.001 |
| Theaspirane^{b} | Hexane | 5.45 ± 0.30 | 3.50 ± 0.33 | 0.017 |
| Theaspirane^{c} | Hexane | 5.80 ± 0.30 | 3.30 ± 0.28 | 0.001 |
| Theaspirane^{d} | Hexane | 6.00 ± 0.37 | 3.70 ± 0.37 | 0.002 |
| Theaspirane^{e} | Hexane | 5.75 ± 0.41 | 3.70 ± 0.47 | NS |
| Theaspirane^{f} | Hexane | 5.75 ± 0.39 | 3.60 ± 0.41 | 0.04 |
| Theaspirane^{g} | Hexane | 4.85 ± 0.36 | 4.15 ± 0.38 | NS |
| Theaspirane^{h} | Hexane | 5.45 ± 0.49 | 3.80 ± 0.46 | NS |
| Theaspiraneⁱ | Hexane | 6.25 ± 0.36 | 3.35 ± 0.37 | 0.004 |
| Theaspirane^{j} | Hexane | 6.20 ± 0.39 | 2.35 ± 0.43 | 0.014 |

| | | | | |
|---|---|---|---|---|
| ^{a}Mixture of all 4 isomers of theaspirane at 0.1 µg / µl total concentration (2 µg total dose) ^{b}Mixture of all 4 isomers of theaspirane at 0.1 µg / µl total concentration (2 µg total dose) ^{c}Mixture of all 4 isomers of theaspirane at 0.01 µg / µl total concentration (0.2 µg total dose) ^{d}Mixture of all 4 isomers of theaspirane at 0.001 µg / µl total concentration (0.02 µg total dose) ^{e}Mixture of (2R,5R)- and (2S, 5R)-theaspirane at 0.1 µg / µl total concentration (2 µg total dose) ^{f}Mixture of (2*R*,5*R*)- and (2*S*,5*R*)-theaspirane at 0.01 µg / µl total concentration (0.2 µg total dose) ^{g}Mixture of (2*R*,5*R*)- and (2*S*,5*R*)-theaspirane at 0.001 µg / µl total concentration (0.02 µg total dose) ^{h}Mixture of (2*S*,5*S*) and (2*R*,5*S*)-theaspirane at 0.1 µg / µl total concentration (2 µg total dose) ⁱMixture of (2*S*,5*S*) and (2*R*,5*S*)-theaspirane at 0.01 µg / µl total concentration (0.2 µg total dose) ^{j}Mixture of (2*S*,5*S*) and (2*R*,5*S*)-theaspirane at 0.001 µg / µl total concentration (0.02 µg total dose) | | | | |

All the three samples tested, senesced banana leaves, VOCs of senesced banana leaves and synthetic theaspirane, were found to have significantly attracted more weevils compared to controls.

Banana leaves VOCs and synthetic (2*RS*,5*RS*)-theaspirane had a higher significant difference to controls (*P*<0.001 each) compared to that in senesced banana leaves (*P*<0.01).

Accordingly, it was shown that both synthetic (2*RS*,5*RS*)-theaspirane and natural source of (2*R*,5*S*)-theaspirane are attractants for banana weevils.

Generally, adult weevils were significantly attracted to the odour of 2, 0.2 and 0.02 µg of synthetic (2*RS*,5*RS*)-theaspirane compared to controls.

### Example 3 - Theaspirane as a synergist in combination with Cosmolure

Olafactometer assays were carried out using senesced banana leaf material, theaspirane, identified above from senesced banana leaf material, and Cosmolure, the commercially available banana weevil aggregation pheromone. (2*S*,5*S* and 2*R*,5*S*)-theaspirane, as described above, was prepared as an isomeric mixture using preparative scale gas chromatography and diluted to a concentration of 0.0025 µg/µl in hexane. The Cosmolure lures (P160-Lure) were purchased from ChemTica International, South Africa and stored at 4°C until required for use in behavioral assays.

Olfactometer assays were carried out to investigate the influence of (2*S*,5*S*) and (2*R*,5*S*)-theaspirane when combined with the banana weevil pheromone. Since the pheromone attracts both male and female banana weevils it was not necessary to sex the weevils before these tests using the pheromone.

A combination of (2*S*,5*S* and 2*R*,5*S*)-theaspirane and Cosmolure (opened for 14 days) was significantly (P = 0.014) attractive compared to hexane solvent as control. The combination also had a significant difference (P = 0.04) in attraction compared to Cosmolure (opened for 14 days) used alone as control. It was found that 0.0025 µg/µl (2R,5S)-theaspirane produced a synergistic blend of chemical cues with Cosmolure and resulted in a significant attraction of the weevils. This was despite 0.0025 µg/µl (2R,5S)-theaspirane providing no significant attraction compared to the hexane solvent control when used alone.

**Table 2 Olfactory responses of adult banana weevils, Cosmopolites sordidus, to Cosmolure (commercially available aggregation pheromone) in a linear olfactometer. Response measured as the mean (± SE) number of weevils found in each chamber of the olfactometer at the end of the experiment. Data were analysed by students t-test. NS = No significant difference between treatments. 20 Replicates were done for each assay.**

| **Treatment A** | **Treatment B** | **Mean ± SE** | **Mean ± SE** | ***P*** |
|---|---|---|---|---|
| Cosmolure^{a} | Clean air | 0.70 ± 0.13 | 8.60 ± 0.18 | <0.001 |
| Cosmolure^{b} | Clean air | 3.85 ± 0.33 | 5.55 ± 0.36 | 0.019 |
| Cosmolure^{c} | Clean air | 3.90 ± 0.32 | 5.55 ± 0.32 | 0.016 |
| Cosmolure^{d} | Clean air | 5.95 ± 0.27 | 3.80 ± 0.28 | 0.004 |
| Theaspirane^{e} | Hexane | 4.60 ± 0.48 | 5.00 ± 0.52 | NS |
| Theaspirane^{e} | Theaspirane^{f} | 4.65 ± 0.31 | 5.20 ± 0.32 | NS |
| Theaspirane^{e} | Senesced banana leaf material | 3.45 ± 0.25 | 6.30 ± 0.30 | <0.001 |
| Cosmolure^{d} + Theaspirane^{e} | Hexane | 5.90 ± 0.30 | 3.90 ± 0.31 | 0.014 |
| Cosmolure^{d} + Theaspirane^{e} | Cosmolure^{d} | 5.70 ± 0.35 | 3.95 ± 0.29 | 0.04 |

| | | | | |
|---|---|---|---|---|
| ^{a}Cosmolure freshly opened ^{b}Cosmolure 4 days after opening ^{c}Cosmolure 8 days after opening ^{d}Cosmolure 14 days after opening ^{e}Mixture of (2*S*,5*S*) and (2*R*,5*S*)-theaspirane at 0.0025 µg/µl total concentration (0.05 µg total dose) ^{f}Mixture of all 4 isomers of theaspirane (Sigma-Aldrich) at 0.005 µg/µl total concentration (0.1 µg total dose) | | | | |

With further reference to the results presented above, tests of freshly opened Cosmolure found that Cosmolure was initially not attractive (probably was repellent) to adult banana weevils in the olfactometer. However, it became increasingly attractive after exposure to air in the laboratory. The opened Cosmolure sachet was exposed to open air in the laboratory and the tests showed that the number of weevils that moved into the Cosmolure test chamber of the olfactometer increased from the 1st, 4th, 8^{th} to the 14^{th} day. After losing some concentration, the difference in the number of weevils attracted compared to clean air control became significant P<0.004) on the fourteenth (14th) day.

## Claims

1. A pest attractant composition comprising a first pest attractant and a second pest attractant, wherein the first pest attractant comprises theaspirane or an isomer or mixture of isomers thereof, and wherein the second pest attractant comprises sordidin or an isomer or mixture of isomers thereof.

2. A pest attractant composition according to claim 1, wherein the first pest attractant comprises one or more isomers of theaspirane selected from (i) (2*R*,5*S*)-theaspirane, (ii) (2*R*,5*R*)-theaspirane, (iii) (2*S*,5*R*)-theaspirane, and (iv) (2*S*,5*S*)-theaspirane.

3. A pest attractant composition according to claim 1 or 2, wherein the first pest attractant comprises (2*R*,5*S*)-theaspirane, or
wherein the first pest attractant comprises (i) (2*R*,5*S*)-theaspirane, and (ii) (2*S*,5*S*)-theaspirane, or
wherein the first pest attractant comprises (i) (25,55)-theaspirane, and (ii) (2*S*,5*R*)-theaspirane, or
wherein the first pest attractant comprises (i) (2*R*,5*S*)-theaspirane, and (ii) (2*S*,5*R*)-theaspirane, or
wherein the first pest attractant comprises (i) (2*R*,5*S*)-theaspirane, and (ii) (2*R*,5*R*)-theaspirane, or
wherein the first pest attractant comprises (2*S*,5*S*)-theaspirane.

4. A pest attractant composition according to any preceding claim, wherein the first pest attractant consists essentially of theaspirane or an isomer or mixture of isomers thereof.

5. A pest attractant composition according to any preceding claim, wherein the pest is a pest of a plant of the *Musaceae* family.

6. Use of a composition according to any preceding claim for attracting pests.

7. A trap for catching pests, wherein the trap comprises a composition according to any of claims 1 to 5.

## Patentansprüche

1. Schädlingslockstoff-Zusammensetzung, umfassend einen ersten Schädlingslockstoff und einen zweiten Schädlingslockstoff, wobei der erste Schädlingslockstoff Theaspiran oder ein Isomer oder ein Gemisch von Isomeren davon umfasst, und wobei der zweite Schädlingslockstoff Sordidin oder ein Isomer oder ein Gemisch von Isomeren davon umfasst.

2. Schädlingslockstoff-Zusammensetzung nach Anspruch 1, wobei der erste Schädlingslockstoff ein oder mehrere Isomere von Theaspiran umfasst, ausgewählt aus (i) (2*R*,5*S*)-Theaspiran, (ii) (2*R*,5*R*)-Theaspiran, (iii) (2*S*,5*R*)-Theaspiran und (iv) (2*S*,5*S*)-Theaspiran.

3. Schädlingslockstoff-Zusammensetzung nach Anspruch 1 oder 2, wobei der erste Schädlingslockstoff (2*R*,5*S*)-Theaspiran umfasst, oder
wobei der erste Schädlingslockstoff (i) (2R,5S)-Theaspiran und (ii) (2*S*,5*S*)-Theaspiran umfasst, oder
wobei der erste Schädlingslockstoff (i) (2*R*,5*R*)-Theaspiran und (ii) (2*S*,5*R*)-Theaspiran umfasst, oder
wobei der erste Schädlingslockstoff (i) (2*R*,5*S*)-Theaspiran und (ii) (2*S*,5*R*)-Theaspiran umfasst, oder
wobei der erste Schädlingslockstoff (i) (2*S*,5*S*)-Theaspiran und (ii) (2*R*,5*R*)-Theaspiran umfasst, oder
wobei der erste Schädlingslockstoff (2*S*,5*S*)-Theaspiran umfasst.

4. Schädlingslockstoff-Zusammensetzung nach einem vorherigen Anspruch, wobei der erste Schädlingslockstoff im Wesentlichen aus Theaspiran oder einem Isomer oder einem Gemisch von Isomeren davon besteht.

5. Schädlingslockstoff-Zusammensetzung nach einem vorherigen Anspruch, wobei der Schädling ein Schädling einer Pflanze der Familie *Musaceae* ist.

6. Verwendung einer Zusammensetzung nach einem vorherigen Anspruch zum Anlocken von Schädlingen.

7. Falle zum Fangen von Schädlingen, wobei die Falle eine Zusammensetzung nach einem der Ansprüche 1 bis 5 umfasst.

## Revendications

1. Composition d'agents attirant les nuisibles comprenant un premier agent attirant les nuisibles et un second agent attirant les nuisibles, ledit premier agent attirant les nuisibles comprenant du théaspirane ou un isomère ou un mélange d'isomères de celui-ci, et ledit second agent attirant les nuisibles comprenant de la sordidine ou un isomère ou un mélange d'isomères de celle-ci.

2. Composition d'agents attirant les nuisibles selon la revendication 1, ledit premier agent attirant les nuisibles comprenant un ou plusieurs isomères de théaspirane choisis parmi (i) le (2*R*,5*S*)-théaspirane, (ii) le (2R,5R)-théaspirane, (iii) le (2S,5R)-théaspirane et (iv) le (2*S*,5*S*)-théaspirane.

3. Composition d'agents attirant les nuisibles selon la revendication 1 ou 2, ledit premier agent attirant les nuisibles comprenant du (2*R*,5*S*)-théaspirane, ou
ledit premier agent attirant les nuisibles comprenant (i) du (2*R*,5*S*)-théaspirane et (ii) du (2*S*,5*S*)-théaspirane, ou
ledit premier agent attirant les nuisibles comprenant (i) du (2*R*,5*R*)-théaspirane et (ii) du (2*S*,5*R*)-théaspirane, ou
ledit premier agent attirant les nuisibles comprenant (i) du (2*R*,5*S*)-théaspirane et (ii) du (2*S*,5*R*)-théaspirane, ou
ledit premier agent attirant les nuisibles comprenant (i) du (2*S*,5*S*)-théaspirane et (ii) du (2*R*,5*R*)-théaspirane, ou
ledit premier agent attirant les nuisibles comprenant du (2*S*,5*S*)-théaspirane.

4. Composition d'agents attirant les nuisibles selon l'une quelconque des revendications précédentes, ledit premier agent attirant les nuisibles étant constitué essentiellement de théaspirane ou d'un isomère ou d'un mélange d'isomères de celui-ci.

5. Composition d'agents attirant les nuisibles selon l'une quelconque des revendications précédentes, ledit nuisible étant un nuisible d'une plante de la famille des *Musacées.*

6. Utilisation d'une composition selon l'une quelconque des revendications précédentes pour attirer des nuisibles.

7. Piège destiné à attraper des nuisibles, ledit piège comprenant une composition selon l'une quelconque des revendications 1 à 5.
